# EUROPÄISCHE PATENTANMELDUNG

(11) **EP 2 447 114 A2**
(43) Veröffentlichungstag der Anmeldung: **02.05.2012**
(21) Anmeldenummer: 11466033.5
(22) Anmeldetag: 27.10.2011
(51) Int. Cl.: B60N 3/10

(54) **Flaschenhalter in einem Fahrzeug**

(30) Priorität: 02.11.2010 CZ 20100791
(71) Anmelder: Skoda Auto A.S., 293 60 Mladá Boleslav (CZ)
(72) Erfinder: Velíková, Katerína, Mladá Boleslav 29301 (CZ); Marada, Pavel, Dobrovice 29441 (CZ)

(57) **Zusammenfassung**

Die Anmeldung betrifft einen Halter (1) für eine Flasche (10) in einem Fahrzeug, der im Fahrgastraum zwischen dem Vordersitz (9) und dem Fußbereich am vorderen Abschnitt des Mitteltunnels (12) des Fahrzeuges angeordnet ist. Der Halter (1) der Flasche (10), ist auf ein Griffteil (3) der Betätigungsstange (2) der Verstellung des Sitzes (9) aufgesetzt. Die Erfindung liegt darin, dass der Halter (1) der Flasche (10) eine ringförmige Fassung (4) und einen Vorbau (5) aufweist, der mit der Fassung (4) verbunden ist. Der Vorbau (5) weist eine Öffnung (11) auf, die für das Einsetzen des Griffteils (3) ausgestaltet ist. Im oberen Abschnitt der Verbindung des Vorbaus (5) mit der Fassung (4) ist an der Fassung (4) sowie am Vorbau (5) ein elastischer Durchbruch (6) ausgebildet. Der Vorbau (5) weist im Bereich des Durchbruchs (6) eine Raste (7) und der Griffteil (3) eine Ausnehmung (8) auf. Die Raste (7) ist für das Einrasten in die Ausnehmung (8) ausgestaltet, wodurch eine Verrastung des Halters (1) am Griffteil (3) gebildet wird.

## Beschreibung

### Technisches Gebiet

Die Erfindung betrifft einen Flaschenhalter, der im Fahrgastraum zwischen dem Sitz und dem vorderen Abschnitt des Mitteltunnels im Fußbereich des Beifahrers angeordnet und an dem Griffteil der Betätigungsstange der Sitzverstellung, aufgesetzt ist, wobei der Flaschenhalter zur Aufbewahrung von Trinkflaschen oder beliebigen Gefäße für den Bedarf der Fahrzeuginsassen dient.

### Bisheriger Stand der Technik

Für die Befestigung verschiedener Flaschen und flaschenförmiger Gefäße im Fahrer- und Beifahrerbereich werden geläufig verschiedene Halterungen und komplizierte Befestigungssysteme verwendet. Diese Halterungen sind in überwiegender Mehrheit an der Schalttafel oder am Mitteltunnel zwischen dem Fahrer und dem Beifahrer angeordnet.

Im Dokument DE20213079U1 ist ein Flaschenhalter beschrieben, der am Fahrer- oder Beifahrersitz angeordnet und an beliebiger Stelle der unteren Sitzverkleidung befestigt werden kann. Es handelt sich um einen geschlossenen oder offenen rohrförmigen Halter mit einem Basisteil und mit verschiedenen zusätzlichen in den Halter einsetzbaren Einbauelementen, der im Auto an der Sitzverkleidung neben dem Mitteltunnel oder an vielen anderen Stellen befestigt werden kann und zum Abstellen unterschiedlicher Flaschen und flaschenähnlichen Behälter dient. Der Halter ist rohrförmig mit einer Länge von ca. 100mm und kann mit oder ohne Boden ausgestaltet sein. Dieser Halter wird am Fahrer- oder Beifahrersitz verschraubt oder durch sonstige Verbindungen befestigt. Somit wird der Halter immer bei der Sitzverstellung mit dem Sitz verschoben und behält damit immer die gleiche Position am Sitz. Der Halter ist in der Ecke zur Mitte des Fahrzeuges seitlich unter / neben den Knien des Nutzers angeordnet, wo er nicht störend ist und die Flasche sicher verklemmen kann. Der ringförmige Halter kann auch als Abfallbehälter genutzt werden, wenn in den Ring eine Plastik- oder Papiertüte eingehängt wird. Dokument DE10223404A1 beschreibt eine Haltevorrichtung für die Befestigung eines Trinkgefäßes im Fahrgastraum zwischen dem Fahrer- und Beifahrersitz, die beliebig an der Mittelkonsole im Abschnitt zwischen der Schalttafel und den Fondsitzen befestigt werden kann. Zur Mittelkonsole ist in diesem Abschnitt ein Verbindungsteil befestigt, auf dem senkrecht zur Vertikale der Flaschenhalter frei aufgesetzt ist. Dieser Verbindungsteil kann auch zur Vorderseite des Fahrer- sowie Beifahrersitzrahmens im Fußbereich befestigt werden. Der Verbindungsteil umfasst eine ringförmige Aufnahme. Der Flaschenhalter umfasst einen Haltearm, auf dem ein ausfahrbarer Bolzen befestigt ist. Die eigentliche Verbindung des Flaschenhalters mit dem Verbindungsteil ist derart ausgeführt, dass der ausfahrbare Bolzen des Flaschenhalters in die ringförmige Aufnahme des Verbindungsteils eingesteckt wird.

Im DE9408692U1 ist ein aus einem offenen Federring bestehender Flaschenhalter beschrieben, der einen Eintrittsspalt für die Aufnahme eines Getränkebehälters umfasst. An einer dem Eintrittsspalt gegenüberliegenden Stelle ist der Gefäßhalter mit einem Halteteil verbunden. Dieser Halteteil ist als Klipskörper mit zwei federnd aufspreizbaren Schenkeln ausgebildet, der an einem Griffende einer Betätigungsstange einer Sitzverstellung befestigt ist. Der Halteteil kann anstelle durch Federkraft auch magnetisch an dem Griffteil der Betätigungsstange verankert sein. Der Nachteil derartiger Lösungen liegt darin, dass durch die Schwingungen während der Fahrt sich die federnden Schenkel des Halteteils oder des magnetischen Halteteils am Umlauf des Griffteils der Betätigungsstange der Sitzverstellung bewegen können und dadurch kann sich auch der im Gefäßhalter abgestellte Getränkebehälter bewegen.

### Darstellung der Erfindung

Die Aufgabe wird mit einem im Fahrgastraum zwischen dem Vordersitz und dem vorderen Abschnitt des Mitteltunnels im Fußbereich der Fahrgäste angeordneten Flaschenhalter gelöst. Der Halter ist auf dem Griffteil der Betätigungsstange der Sitzverstellung aufgesetzt. Die Darstellung der Erfindung liegt darin, dass der Flaschenhalter durch eine ringförmige Fassung und einen Vorbau gebildet wird, die aneinander verbunden sind. Der Vorbau weist eine Öffnung auf, die für das genaue Einsetzen des Griffteils der Betätigungsstange der Sitzverstellung ausgestaltet ist. Im oberen Abschnitt der Verbindung des Vorbaus mit der Fassung ist an der Fassung sowie dem Vorbau ein elastischer vertikaler paralleler Durchbruch ausgebildet. Der Vorbau weist im Bereich des Durchbruchs eine Raste und der Griff eine Ausnehmung auf. Die Raste des Vorbaus ist für das genaue Eingreifen in die Ausnehmung des Griffes ausgestaltet, wodurch eine Verrastung des Halters in der Fassung gebildet wird. Der Halter ist aus einem elastischen Kunststoff ausgebildet und die Flasche entspricht einer handelsüblichen PET-Flasche für Getränke.

### Übersicht der Figuren der Zeichnungen

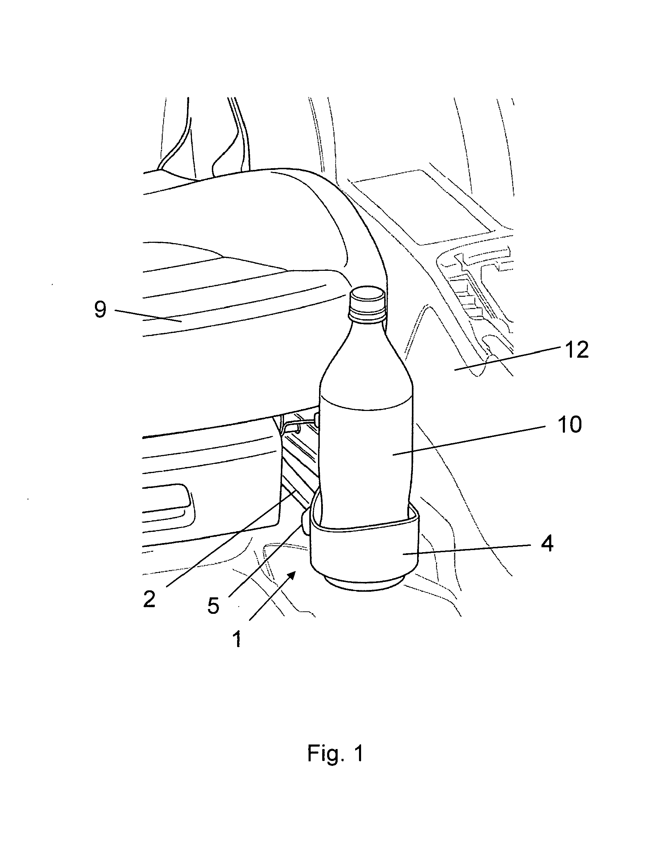

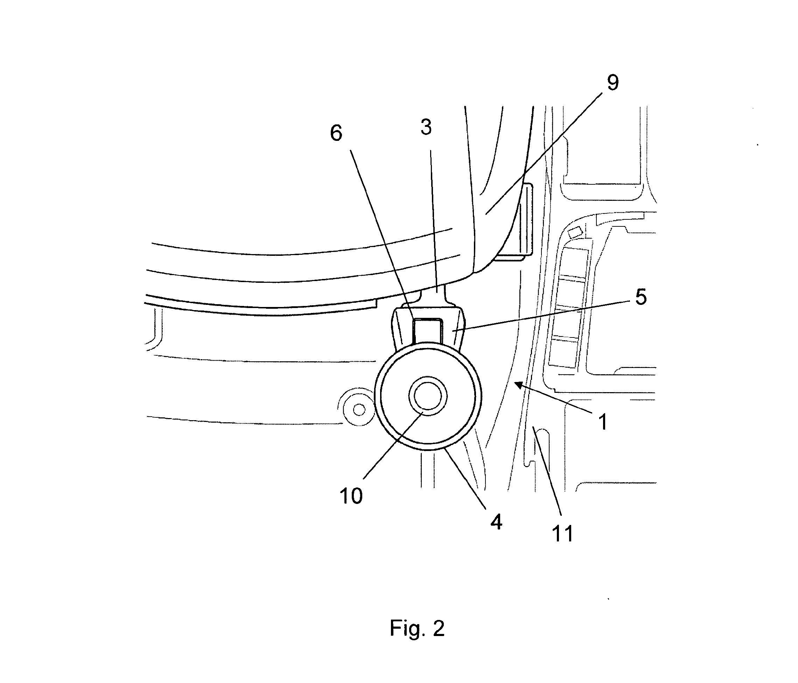

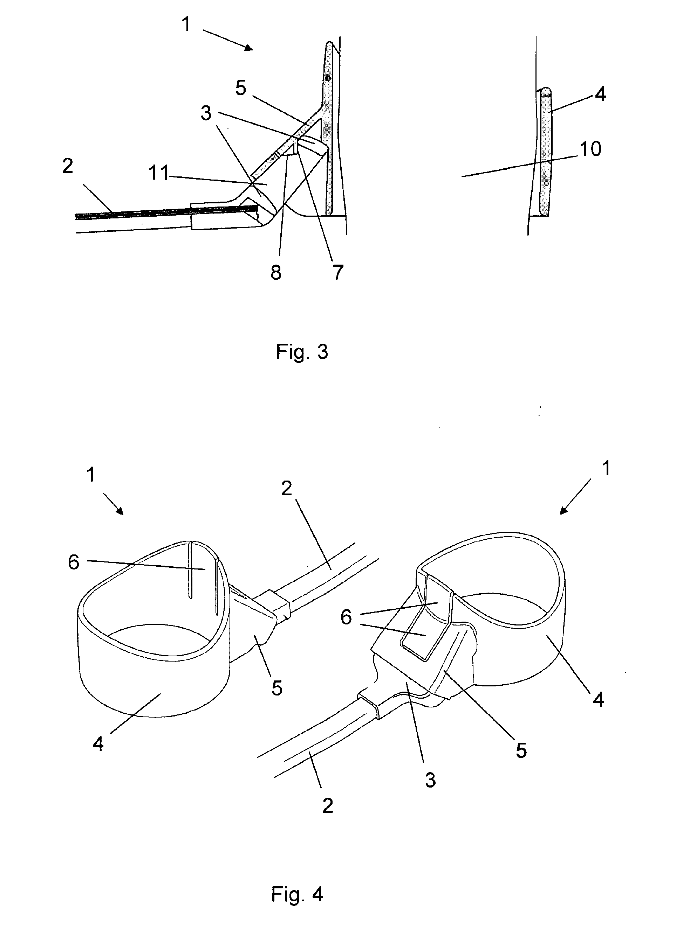

In der Fig. 1 ist die erfindungsgemäße Anordnung des Halters und der Flasche in einer perspektivischen Gesamtansicht des Raumes zwischen dem Vordersitz und dem Mitteltunnel des Fahrzeuges, in Fig. 2 die gleiche Anordnung des Halters und der Flasche in einer Draufsicht, in Fig. 3 der Flaschenhalter einschl. seiner Befestigung zum Griff der Betätigungsstange der Sitzverstellung in einem Seitenschnitt und in Fig. 4 in zwei unterschiedlichen perspektivischen Ansichten der eigentliche Halter in der zum Griff befestigten Stellung dargestellt.

### Ausführungsbeispiel der Erfindung

In Fig. 1 und 2 ist der Raum zwischen dem Vordersitz 9 des Beifahrers und dem Mitteltunnel 12 des Fahrzeuges dargestellt. Am Griffteil 3 der Betätigungsstange 2 der manuellen Verstellung des Sitzes 9 ist ein Halter 1 aufgesetzt, in dem eine Flasche 10 abgestellt ist. Der Halter 1 der Flasche 10 umfasst eine ringförmige Fassung 4 und einen Vorbau 5, der mit dieser Fassung 4 verbunden ist. Der Vorbau 5 weist eine Öffnung 11 auf, die für das Einsetzen des Griffteils 3 ausgestaltet ist. Über diese Öffnung 11 wird eben der Halter 1 der Flasche 10 auf den Griffteil 3 der Betätigungsstange 2 der manuellen Verstellung des Sitzes 9 aufgesetzt. Im oberen Abschnitt der Verbindung des Vorbaus 5 mit der Fassung 4, nach Fig. 3 und 4, ist auf der Fassung 4 sowie dem Vorbau 5 ein elastischer vertikaler paralleler Durchbruch 6 ausgebildet. Im Bereich des Durchbruchs 6, von unten in der Richtung zur Öffnung 11, weist der Vorbau 5 eine Raste 7 und der Griffteil 3 eine Ausnehmung 8 auf. Die Raste 7 sowie die Ausnehmung 8 sind derart ausgebildet, damit sie gegenseitig einrasten und so eine stabile Verrastung des Halters 1 an dem Griffteil 3 bilden. Die Öffnung 11 sowie das innere Profil des Vorbaus 5 entsprechen derart dem Profil des Griffteiles 3, damit die Verrastung des Halters fest ist und bei der Fahrt des Fahrzeuges keine zusätzlichen Schwingungen, Klappergeräusche und Schläge des Halters 1 auftreten.

Der Einbau des Halters 1 der Flasche 10 auf das Griffteil 3 der Betätigungsstange 2 der manuellen Verstellung des Sitzes 9 ist aus den weiter abgebildeten Darstellungen zu entnehmen, insbesondere dann der Fig. 3 und 4. Das Aufsetzen des Halters wird derart vorgenommen, dass der Halter 1 mittels der Öffnung 11 im Vorbau 5 auf den Griffteil 3 der Betätigungsstange 2 aufgesetzt wird. Durch nachfolgenden Fingerdruck im oberen Abschnitt des elastischen Durchbruchs 6 der ringförmigen Fassung 4 in Richtung vom Griffteil 3 zur Mitte der ringförmigen Fassung 4 schwenkt der elastische Durchbruch 6 des Vorbaus 5 und somit auch seiner Raste 7 nach oben aus. Durch das Einsetzen des Griffteils 3 in die Öffnung 11 und das nachfolgende Nachlassen des Andrucks des elastischen Durchbruchs 6 der ringförmigen Fassung 4 wird die Raste 7 des Vorbaus 5 in die Ausnehmung 8 des Griffteils 3 eingerastet. Damit wird der Halter auf dem Griffteil gehalten und gegen das Ausrücken gesichert.

Der nachfolgende Ausbau erfolgt identisch, jedoch in umgekehrter Reihenfolge. Durch den Druck am oberen Abschnitt des elastischen Durchbruchs 6 der ringförmigen Fassung 4 rückt die Raste 7 des Vorbaus 5 aus der Ausnehmung 8 des Griffteils 3 aus. Danach wird der Griffteil 3 aus dem Vorbau 5 des Halters 1 herausgeschoben und der Andruck auf den elastischen Durchbruch 6 der ringförmigen Fassung 4 losgelassen.

Der Halter ist aus einem elastischen Kunststoff ausgebildet und die Flasche entspricht einer handelsüblichen PET-Flasche für Getränke. Die ringförmige Fassung des Halters kann mit unterschiedlichen Durchmessern ausgebildet werden, die jedoch den üblichen PET-Standardflaschen entsprechen, welche standardmäßig für verschiedene Getränke wie Limonaden, Mineralwasser usw. in verschiedenen Volumengrößen (0,5I; 1I; 1,5I; 2I usw.) verwendet werden.

### Gewerbliche Anwendbarkeit

Der erfindungsgemäße Flaschenhalter kann in allen Automobilen eingesetzt und vorteilhaft beispielsweise im Fahrgastraum zwischen dem Vordersitz und dem vorderen Abschnitt des Mitteltunnels im Fußbereich des Beifahrers angeordnet werden.

### Verwendete Bezeichnungen

- 1: Flaschenhalter
- 2: Betätigungsstange der Sitzverstellung
- 3: Griffteil der Betätigungsstange
- 4: ringförmige Fassung des Halters
- 5: Vorbau des Halters
- 6: elastischer Durchbruch
- 7: Raste des Vorbaus
- 8: Ausnehmung am Griffteil
- 9: Fahrzeugsitz
- 10: Flasche
- 11: Öffnung des Vorbaus
- 12: Mitteltunnel des Fahrzeuges

## Patentansprüche

1. Ein Halter (1) der Flasche (10), der im Fahrgastraum zwischen dem Vordersitz (9) und dem Fußbereich am vorderen Abschnitt des Mitteltunnels (12) des Fahrzeuges angeordnet und auf dem Griffteil (3) der Betätigungsstange (2) der Sitzverstellung (9) aufgesetzt ist, **dadurch gekennzeichnet, dass**
- der Halter (1) der Flasche (10) umfasst
eine ringförmige Fassung (4), die für das genaue Einsetzen der Flasche (10) in den Halter (1) ausgestaltet ist,
einen Vorbau (5), der fest mit der Fassung (4) verbunden ist und eine Öffnung (11) aufweist, die für das Einsetzen des Griffteils (3) ausgestaltet ist, wobei im oberen Abschnitt der Verbindung des Vorbaus (5) mit der Fassung (4) an der Fassung (4) sowie am Vorbau (5) ein elastischer Durchbruch (6) ausgebildet ist,
- und dass der Vorbau (5) im Bereich des Durchbruchs (6) eine Raste (7) und der Griffteil (3) eine Ausnehmung (8) aufweisen, wobei die Raste (7) für das Einsetzen in die Ausnehmung (8) ausgestaltet ist, wodurch eine Verrastung des Halters (1) am Griff (3) gebildet wird.

2. Ein Halter (1) der Flasche (10) nach Anspruch 1 **dadurch gekennzeichnet, dass** der Halter (1) aus elastischem Kunststoff ausgebildet ist.

3. Ein Halter (1) nach Ansprüchen 1 und 2 **dadurch gekennzeichnet, dass** die Flasche (10) eine handelsübliche PET-Flasche ist.
